# EUROPEAN PATENT SPECIFICATION

(11) **EP 3 031 557 B1**
(45) Date of publication and mention of the grant of the patent: **22.01.2020**
(21) Application number: 15197513.3
(22) Date of filing: 02.12.2015
(51) Int. Cl.: B23B 51/10, B23D 77/00

(54) **CUTTING TOOL AND CUTTING DEVICE INCLUDING THE SAME**
SCHNEIDWERKZEUG UND SCHNEIDVORRICHTUNG DAMIT
DISPOSITIF DE COUPE ET OUTIL DE COUPE COMPRENANT CELUI-CI

(30) Priority: 12.12.2014 JP 2014251856
(43) Date of publication of application: 15.06.2016
(73) Proprietor: Toyo Co., Ltd., Nagano 399-0704 (JP)
(72) Inventor: Yoshie, Shintaro, Nagano, 399-0704 (JP)
(74) Representative: Hoffmann Eitle

(56) References cited:
- EP-A1- 1 779 950
- WO-A1-98/09758
- DE-U1- 8 912 860
- JP-A- 2013 184 285
- US-A- 4 507 028

## Description

### Field

The present invention relates to a cutting tool according to the preamble of claim 1 that enables smooth and accurate processing such as chamfering and deburring of a rear surface and a front surface of a workpiece, and a cutting device including the cutting tool. Such a cutting tool and such a cutting device are known from EP 1 779 950 A1.

### Background

In prior art, cutting tools such as drills and end mills are used to drill a metal workpiece. These cutting tools are used in a state of being attached to a cutting device such as a drilling machine, a numerical control (NC) lathe, or a machining center. When a workpiece is drilled using these cutting tools, cutting is performed from one surface of the workpiece, for example, a front surface in a state where the workpiece is placed on the lathe, and the cutting tool is made to pierce the workpiece to the other surface of the workpiece, for example, the rear surface.

In the processing, when the cutting tool goes through a hole of the rear surface of the workpiece, burrs, which must be removed, may be generated around the hole. The circumference of the formed hole has corners that may injure workers or users when they touch them or may damage the other components. For this reason, chamfering is performed to smooth the corners. As described above, drilling needs processing of the rear side of each of the workpieces, but turning over the workpieces one by one to process them again requires labor and time, and deteriorates workability. In addition, the cutting tool cannot be put into workpieces having a cylindrical shape or the like from the rear, and cannot process them. Furthermore, burrs or corners may be generated around a hole on the front surface in drilling. It is required to produce a cutting tool capable of processing the front surface of a workpiece simultaneously with the rear surface thereof.

To process the rear side of a workpiece as described above, Patent Literature 1 described below discloses an invention of a double chamfering drill that enables drilling, chamfering of a front surface and chamfering of a rear surface with one drill. The invention of the double chamfering drill disclosed in Patent Literature 1 discloses a double chamfering drill including a drill body connected to a shank, a cutting edge on a tip portion of the drill body, and a clearance groove notched in parallel with an axis and extending from part of the shank, the drill body, to the cutting edge, wherein a front drill edge forming the cutting edge and having an inclination angle of substantially 90° is formed to gently incline from the tip of the drill, an outer diameter blade is formed above the front drill edge, and a chamfering blade is formed to be inclined with a slightly steep angle from the outer diameter blade to the drill body with an angle of substantially 45° with respect to the outer diameter blade, and the outer diameter blade is formed such that the first width thereof is extremely small and gradually increases from one clearance groove to the other clearance groove.

The invention of the double chamfering drill disclosed in Patent Literature 1 has the front drill edge, the outer diameter blade, and also has an advantage of simultaneous execution of four works: drilling, chamfering of the workpiece, chamfering of the rear surface, and chamfering of the side surface portion.

### Citation List

### Patent Literature

Patent Literature 1: Japanese Patent Application Publication No. 2000-288813

Further, EP 1 779 950 A1 is concerned with a chamfering tool. JP 2013 184285 A is concerned with a rotary tool.

### Summary

### Technical Problem

The invention of the double chamfering drill disclosed in Patent Literature 1 discloses that the chamfering blade that chamfers the rear surface of the hole is formed substantially perpendicularly to the axis of the drill. When chamfering is performed with a chamfering blade formed substantially perpendicularly as described above, cutting is performed with the blade in contact perpendicularly with a portion of the workpiece to be processed. For this reason, a large force is applied to the portion to be cut in a right-angled direction, and may damage the workpiece. In addition, when the drill is used for burring, the burrs are pulled substantially horizontally, and new burrs may occur.

A twist may be formed in the cutting edge as in conventional drills and end mills. However, generally, a twist suitable for drilling is made in the same direction as the rotational direction of the cutting tool. Specifically, this is because cutting chips generated in drilling can be easily discharged along the groove formed together with the cutting edge. For this reason, when a chamfering blade to chamfer the rear surface is formed as an extension of the drilling cutting edge, the chamfering blade is formed with a twist in the same direction as the rotational direction of the cutting tool. When the rear surface is chamfered using a chamfering blade twisted in the same direction as the rotational direction of the cutting tool, the cutting chips are discharged upward, that is, toward the workpiece. This makes it difficult to smoothly perform chamfering and burring processing.

The inventor of the present invention has performed various experiments in view of such problems to be solved in prior art. As a result, the inventor has found that a rear surface can be smoothly burred and chamfered by setting the groove formed in the blade portion of the cutting tool and the cutting edge in a direction opposite to the rotational direction of the cutting tool, and completed an invention of a cutting tool that enables smooth burring, chamfering, and drilling of the front surface.

Specifically, an object of the present invention is to provide a cutting tool that enables smooth burring and chamfering of a rear surface of a workpiece, and a cutting device including the cutting tool.

Another object of the present invention is to provide a cutting tool that enables smooth burring, chamfering, and drilling of a front surface of a workpiece with the same tool, and a cutting device including the cutting tool. Solution to Problem

To solve the above problem, a cutting tool according to the present invention is defined in claim 1 and a cutting device is defined in claim 10. Preferred embodiments are defined in the dependent claims.

According to a preferred embodiment of the present invention, the first groove and the second groove are provided to cross each other.

According to another preferred embodiment of the present invention, the first cutting portion and the second cutting portion are provided in an equal number.

According to another preferred embodiment of the present invention, at least two first cutting portions and at least two second cutting portions are provided.

According to another preferred embodiment of the present invention, the neck portion is connected with a shank having an outer diameter larger than the outer diameter of the neck portion, and
a portion connecting the shank with the neck portion includes a tapered portion having a diameter that is gradually narrowed from the shank toward the neck portion.

### Advantageous Effects of Invention

The cutting tool according to the present invention enables smooth cutting of the rear surface of the workpiece because the first cutting edge of the first cutting portion and the first groove located on the neck portion side are twisted in the direction opposite to the rotational direction of the cutting tool. For example, when the cutting tool is rotated right-handed, the cutting edge and the groove are formed to be left-twisted. By contrast, when the cutting tool is rotated left-handed, the cutting edge and the groove are formed to be right-twisted. By forming the groove and the cutting edge in the direction opposite to the rotational direction, cutting chips of the workpiece that are cut in cutting are smoothly discharged to the tip side of the blade portion by the cutting edge and the groove that are twisted in the direction opposite to the rotational direction.

In addition, the front surface of the workpiece is smoothly cut because the second cutting edge of the second cutting portion and the second groove in the tip portion are formed to be twisted in the same direction as the rotational direction of the cutting tool.

The cutting tool according to the present invention suppresses adhesion or scattering of the cutting chips to the workpiece or the worker, and enhances the workability of the cutting work, because the cutting chips are discharged to the tip side of the blade portion. In addition, the cutting tool according to the present invention has a simple structure, and enables easy manufacturing of the cutting tool at a low cost. The through hole is not limited to a hole having a straight shape, but also includes a hole including a processed part, such as a tapped hole that is threaded to be provided with a thread.

The cutting tool according to the present invention has a structure in which the direction of the twists formed in the first groove and the first cutting edge is set opposite to the rotational direction, and reduces the force applied in cutting the rear surface, even in the case where the cutting tool has small-sized blade and neck portions. This structure can provide a cutting tool with high durability and reduce breakage and damage.

The cutting tool according to the present invention has a structure in which the direction of the twists formed in the second groove and the second cutting edge is set to the rotational direction, and reduces the force applied in cutting the front surface, even in the case where the cutting tool has a small-sized blade and neck portion. This structure can provide a cutting tool with high durability and reduce breakage and damage.

The cutting tool according to a preferred embodiment of the present invention includes at least two first cutting portions and at least two second cutting portions, and enables efficient work.

The cutting tool according to a preferred embodiment of the present invention has a structure in which the portion connecting the shank with the neck portion has a narrowed diameter, and is capable of enduring stress that is received when the cutting tool is pressed against the workpiece in cutting, to reduce breakage and deformation of the cutting tool.

The cutting device according to the present invention enables provision of a cutting device producing the effect of the cutting tool according to the present invention.

### Brief Description of Drawings

FIG. 1 is a side view of a cutting tool according to an embodiment.
FIG. 2 is a photograph substituting for a drawing, illustrating an enlarged side surface of a blade portion of the cutting tool according to the embodiment.
FIG. 3A is a side view illustrating a step of processing a rear surface of a workpiece with the cutting tool according to the embodiment, FIG. 3B is a side view illustrating a step of processing following FIG. 3A, and FIG. 3C is an enlarged view of part IIIC in FIG. 3B, illustrating a state during processing.
FIG. 4A is a side view illustrating a step of rear surface processing following FIG. 3B, FIG. 4B is a schematic diagram illustrating a process of cutting, and FIG. 4C is a side view illustrating a step of processing following FIG. 4A.
FIG. 5 is a side view of a step of processing a front surface with the cutting tool.
FIG. 6 is a side view illustrating another embodiment of the cutting tool.

### Description of Embodiments

Embodiments of the present invention will be explained hereinafter with reference to drawings. However, the following embodiments illustrate cutting tools for materializing the technical idea of the present invention, and cutting devices including the cutting tools, and are not aimed at specifying the present invention thereto. The present invention is equally applicable to other embodiments included in the claims.

### Embodiments

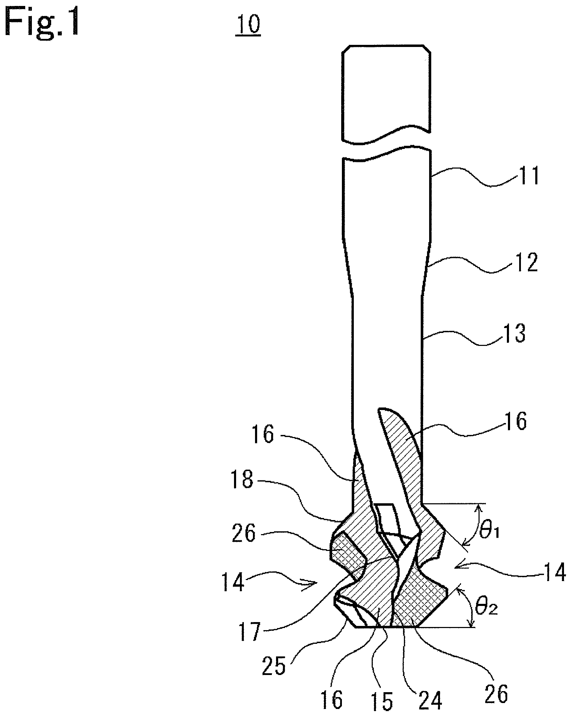

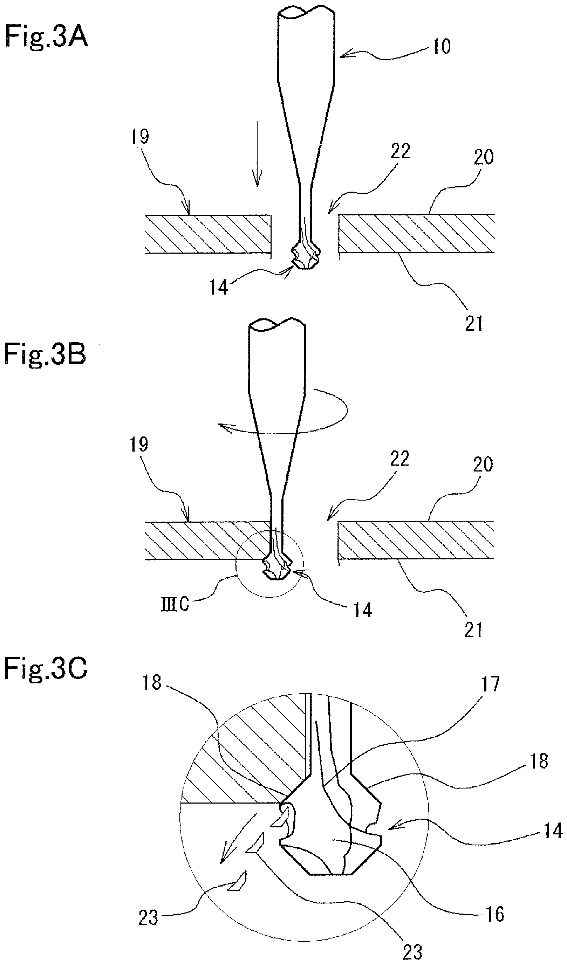

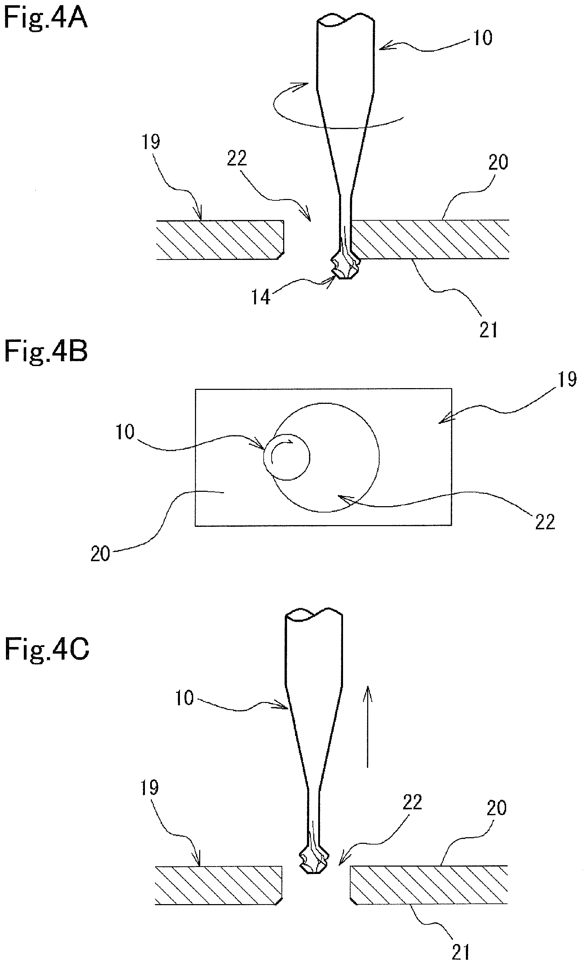

A cutting tool 10 according to an embodiment of the present invention will be explained with reference to FIG. 1 to FIG. 4. The cutting tool 10 according to the embodiment of the present invention is configured to remove burrs generated on a rear surface 21 of a through hole 22 that is formed using a tool such as a drill and an end mill, or chamfer corner portions of the through hole, as illustrated in FIG. 3 and FIG. 4. The rear surface 21 of a workpiece 19 is the other side of the workpiece 19 opposite to a front surface 20. The front surface 20 is one surface of the workpiece 19, that is, the side from which the drill or the like is put into the workpiece 19 to form the through hole 22. Specifically, the rear surface 21 is a side from which the cutting tool 10 projects when the through hole 22 is formed. Although the through hole 22 is described as a simple hole, the through hole 22 is not limited thereto, and may be a tapped hole provided with a thread.

The workpiece is automatically processed by a predetermined program, with the cutting tool 10 according to the embodiment attached to a cutting device. Examples of the cutting device are an NC lathe and a machining center. Because such cutting devices are publicly known, detailed explanations thereof are omitted.

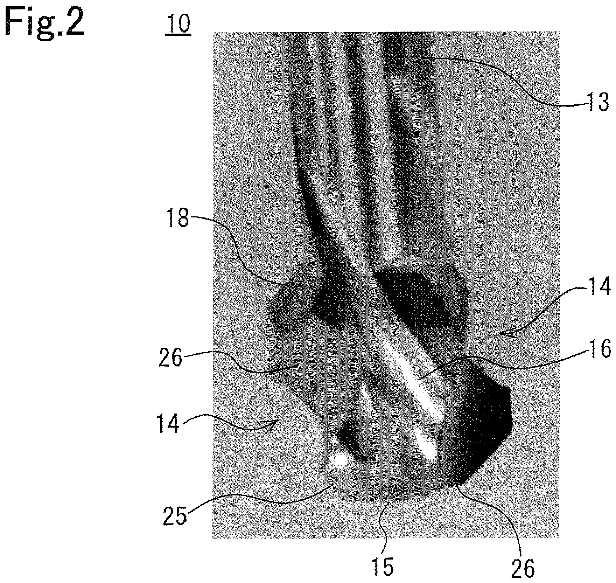

As illustrated in FIG. 1 and FIG. 2, the cutting tool 10 according to the embodiment includes a shank 11, a neck portion 13, and a blade portion 14 that are formed from a metal material as one unitary piece. The shank 11 is formed of a bar-shaped member having a predetermined length and a predetermined outer diameter. One side of the shank 11 is connected with the neck portion 13, and the other side thereof is attached to the cutting device.

The neck portion 13 is formed of a bar-shaped member having a predetermined length and an outer diameter smaller than those of the shank 11 and the blade portion 14. One side of the neck portion 13 is connected with the blade portion 14, and the other side thereof is connected with the shank 11. The length of the neck portion 13 is related to the thickness of the workpiece 19 to be processed, and is a length that enables the blade portion 14 to abut against the rear surface 21 of the workpiece 19. For this reason, the length of the neck portion can be selected in accordance with the workpiece to be processed.

A tapered portion 12 is formed in a portion connecting the shank 11 with the neck portion 13. The diameter of the tapered portion 12 is reduced such that the tapered portion 12 is narrowed from the shank 11 side toward the neck portion 13 side. The tapered portion 12 provided as described above reinforces the portion connecting the shank 11 with the neck portion 13, and reduces damage and breakage due to stress applied in cutting.

The blade portion 14 is formed of a bar-shaped member having a predetermined length and an outer diameter larger than that of the neck portion 13. One side of the blade portion 14 serves as a tip portion 15, and the other side is connected with the neck portion 13. The blade portion 14 is provided with a plurality of first grooves 16. In the embodiment, three first grooves 16 are formed. The first grooves 16 are formed to be twisted in a direction opposite to the direction in which the cutting tool 10 is rotated. Specifically, when the cutting tool 10 is rotated to the right, the first grooves are twisted in the left direction. When the cutting tool 10 is rotated to the left, the first grooves are twisted in the right direction. Because the embodiment illustrates the case of rotating the cutting tool 10 to the right, the first grooves are formed to be twisted in the left direction.

The tip portion 15 side of the blade portion 14 is provided with a plurality of second grooves 26. In the embodiment, three second grooves 26 are formed. The second grooves 26 are formed to be twisted in the direction in which the cutting tool 10 is rotated. Specifically, when the cutting tool 10 is rotated to the right, the second grooves are twisted in the right direction. When the cutting tool 10 is rotated to the left, the second grooves are twisted in the left direction. Because the embodiment illustrates the case of rotating cutting tool 10 to the right, the second grooves are formed to be twisted in the right direction.

First cutting edges 17 are formed along the respective first grooves 16 on the neck portion 13 side of the blade portion 14. Because the first cutting edges 17 are formed to correspond to the number of the first grooves 16, three cutting edges are formed in the embodiment. The blade portion 14 on the neck portion 13 side is also provided with first cutting portions 18 that are pressed against a portion of the workpiece rear surface 21 to be processed, to perform cutting. The first cutting portions 18 are formed by inclining the respective first cutting edges 17 at a predetermined angle θ1. The angle θ1 is formed to be, for example, 45° with respect to the axis of the cutting tool. The angle θ1 can be set to an angle at which the workpiece is processed, and is not limited to 45°, but may be formed as a desired angle.

The tip portion 15 side of the blade portion 14 is provided with second cutting edges 24 along the respective second grooves 26. Because the second cutting edges 24 are formed to correspond to the number of the second grooves 26, three cutting edges are formed in the embodiment. The blade portion 14 on the tip side is also provided with second cutting portions 25 that are pressed against a portion of the front surface 20 of the workpiece to be processed, to perform cutting. The second cutting portions 25 are formed by inclining the respective second cutting edges 24 at a predetermined angle θ2. The tip portion 15 side of the blade portion 14 is formed to be inclined at angle θ2. The tip portion 15 inclined as described above enables easy insertion thereof into a through hole formed in the workpiece, and reduces damage to the front surface of the workpiece. The angle θ2 is formed to be, for example, 45°, but is not limited to 45°, and may be formed as a desired angle.

The following explains a process of processing the rear surface with the cutting tool 10 according to the embodiment, with reference to FIG. 3 and FIG. 4. FIG. 3 and FIG. 4 illustrate cross-sectional views of the workpiece 19 for explanation.

First, as a prerequisite for performing processing with the cutting tool 10 according to the embodiment, a through hole is formed in the workpiece 19 in advance with a drill, an end mill, or the like, as illustrated in FIG. 3A. The diameter of the through hole 22 is larger than the diameter of the blade portion 14 of the cutting tool 10 of the embodiment.

As illustrated in FIG. 3A, the cutting tool 10 of the embodiment is inserted through the through hole 22 in the front surface 20 of the workpiece 19, to dispose the cutting tool 10 such that the first cutting portions 18 of the blade portion 14 face the portion of the workpiece 19 to be processed. Thereafter, as illustrated in FIG. 3B, the cutting tool 10 is rotated in the right direction, and the first cutting portions 18 of the cutting tool 10 abut against the circumferential portion of the through hole 22 to be processed in the rear surface 21 of the workpiece 19, to cut the workpiece 19. In the cutting, as illustrated in FIG. 3C, cutting chips 23 generated by cutting the workpiece 19 pass through the left-twisted grooves 16 formed in the blade portion 14, and are discharged under the workpiece 19.

Thereafter, as illustrated in FIG. 4A and FIG. 4B, the cutting tool 10 is rotated at least once around the outer circumference of the through hole 22, to process the circumference of the through hole 22 on the rear surface 21 side. In the processing, when deep chamfering should be performed, the cutting tool 10 may be rotated a plurality of times around the outer circumference of the through hole. After finishing processing of the circumference of the through hole 22 in the rear surface 21 of the workpiece 19, as illustrated in FIG. 4C, the cutting tool 10 is extracted from the through hole 22 of the workpiece 19, to finish processing of the workpiece, or perform the next processing. The above process serves as the process of processing the rear surface of the workpiece using the cutting tool of the embodiment.

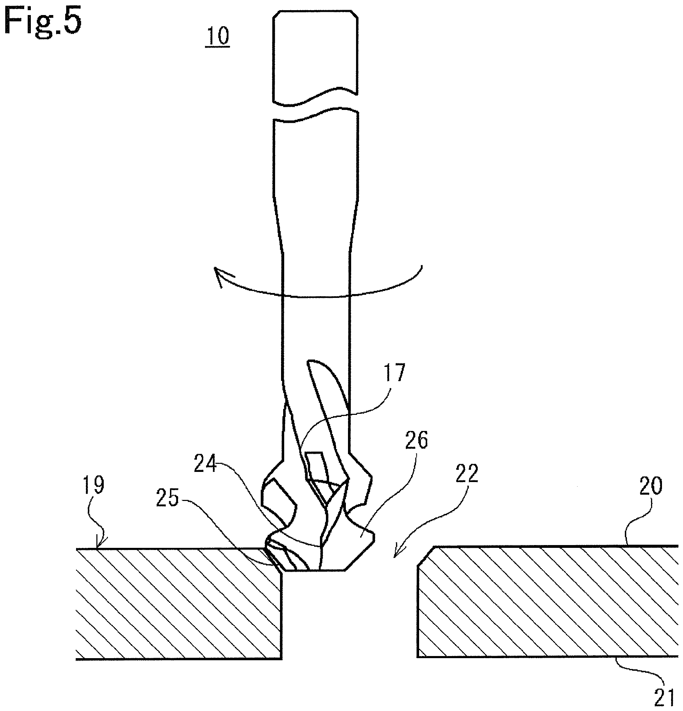

The following explains a process of processing the front surface of the workpiece 19 with the cutting tool 10 of the embodiment, with reference to FIG. 5. FIG. 5 illustrates a cross-sectional view of the workpiece 19 for explanation.

First, as a prerequisite for performing processing with the cutting tool 10 according to the embodiment, a through hole 22 is formed in the workpiece 19 in advance with a drill, an end mill, or the like, as illustrated in FIG. 5. The diameter of the through hole 22 is preferably larger than the diameter of the blade portion 14 of the cutting tool 10 of the embodiment. Otherwise, the through hole may be formed in the workpiece 19 with the second cutting portions 25 in the blade portion 14 of the tip portion of the cutting tool 10.

As illustrated in FIG. 5, the cutting tool 10 of the embodiment is disposed on the front surface 20 of the workpiece 19 such that the second cutting portions 25 of the blade portion 14 face the portion to be processed. Thereafter, the cutting tool 10 is rotated in the right direction, and the second cutting portions 25 of the cutting tool 10 abut against the circumferential portion of the through hole 22 to be processed in the front surface 20 of the workpiece 19, to cut the workpiece 19. In the cutting, as illustrated in FIG. 3C, cutting chips generated by cutting the workpiece 19 pass through the right-twisted second grooves 26 formed in the blade portion 14, and are discharged outside the workpiece 19.

The above structure enables optimal chamfering and burring for the front surface 20 of the workpiece 20. Because the cutting process is similar to those illustrated in FIG. 1 to FIG. 4, a detailed explanation thereof is omitted.

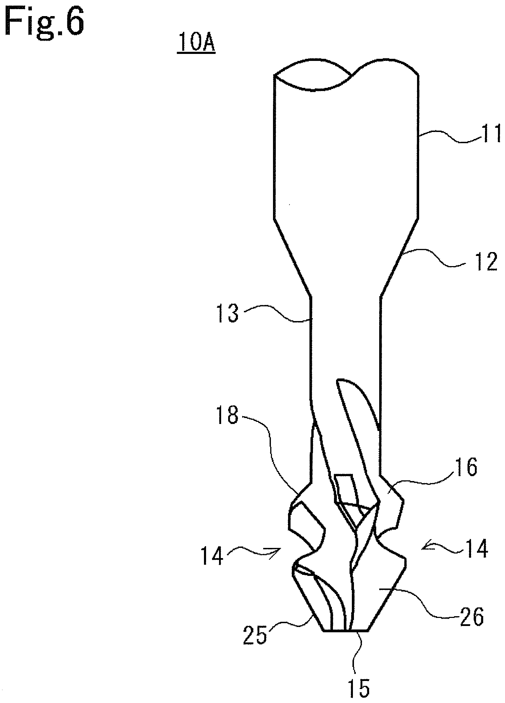

The following explains a cutting tool 10A according to another embodiment, with reference to FIG. 6. The cutting tool 10A is formed of the shank 11, the neck portion 13, and the blade portion 14 that contain a metal material as one unitary piece. The shank 11 is formed of a bar-shaped member having a predetermined length and a slightly large outer diameter, and connected with the neck portion 13 by the inclined tapered portion 12. In addition, the blade portion 14 includes the second cutting edges 24, the second cutting portions 25, and the second grooves 26 that are longer than those in the cutting tool 10 of the embodiment illustrated in FIG. 1 to FIG. 5, toward the tip portion 15 side. With this structure, the cutting tool 10A according to this embodiment includes a tip side sharper than that in the cutting tool 10 of the embodiment illustrated in FIG. 1 to FIG. 5, and enables provision of a cutting tool having a more effective function also for drilling, as well as cutting.

### Reference Signs List

- 10, 10A:: CUTTING TOOL
- 11:: SHANK
- 12:: TAPERED PORTION
- 13:: NECK PORTION
- 14:: BLADE PORTION
- 15:: TIP PORTION
- 16:: FIRST GROOVE
- 17:: FIRST CUTTING EDGE
- 18:: FIRST CUTTING PORTION
- 19:: WORKPIECE
- 20:: FRONT SURFACE
- 21:: REAR SURFACE
- 22:: THROUGH HOLE
- 23:: CHIP
- 24:: SECOND CUTTING EDGE
- 25:: SECOND CUTTING PORTION
- 26:: SECOND GROOVE

## Claims

1. A cutting tool (10, 10A) comprising a blade portion (14) to be inserted from one side (20) of a through hole (22) formed in a workpiece (19), for processing a circumference of the through hole on the other side (21) of the workpiece while being rotated, and a neck portion (13) connected with the blade portion (14) and having an outer diameter smaller than an outer diameter of the blade portion, **characterized in that**
a neck portion side of the blade portion (14) includes at least one first groove (16) twisted in a direction opposite to a direction of the rotation, and at least one first cutting edge (17) extending along the at least one first groove (16) on an outer circumferential side of the blade portion (14),
the neck portion side of the blade portion (14) is provided with a first cutting portion (18) for processing the workpiece,
a tip side of the blade portion (14) includes at least one second groove (26) twisted in the direction of the rotation, and at least one second cutting edge (24) extending along the at least one second groove (26) on the outer circumferential side of the blade portion (14), and
the tip side of the blade portion (14) is provided with a second cutting portion (25) for processing the workpiece (19) .

2. The cutting tool according to claim 1, **characterized in that** the first groove (16) and the second groove (26) are provided to cross each other.

3. The cutting tool according to claim 1, **characterized in that** the first cutting portion (18) and the second cutting portion (25) are provided in an equal number.

4. The cutting tool according to claim 1, **characterized in that** at least two first cutting portions (18) and at least two second cutting portions (25) are provided.

5. The cutting tool according to any one of claims 1 to 4, **characterized in that** the neck portion (13) is connected with a shank (11) having an outer diameter larger than the outer diameter of the neck portion (13), and
a portion connecting the shank (11) with the neck portion (13) includes a tapered portion (12) having a diameter that is gradually narrowed from the shank (11) toward the neck portion (13).

6. The cutting tool according to any preceding claim, wherein the first cutting portion or portions (18) is or are formed by inclining the respective first cutting edge or edges (17) at a predetermined angle θ1 with respect to a line perpendicular to a longitudinal axis of the cutting tool.

7. The cutting tool according to any preceding claim, wherein the second cutting portion or portions is or are formed by inclining the respective second cutting edge or edges (24) at a predetermined angle θ2 with respect to a line perpendicular to a longitudinal axis of the cutting tool.

8. The cutting tool of any preceding claim, configured so that when the cutting tool (10) is rotated, and the first cutting portion or portions (18) of the cutting tool (10) abut against the circumferential portion of the through hole (22) to be processed in a rear surface (21) of the workpiece (19) on the other side of the workpiece (19), cutting chips (23) generated by cutting the workpiece (19) pass through the first groove or grooves (16) formed in the blade portion (14) and are discharged under the workpiece (19) and to the tip side of the blade portion (14).

9. The cutting tool of any preceding claim, configured so that when the second cutting portion or portions (25) of the cutting tool (10) abut against the circumferential portion of the through hole (22) to be processed in the front surface (20) of the workpiece (19) on the one side of the workpiece (19) to cut the workpiece (19), cutting chips generated by cutting the workpiece (19) pass through the second groove or grooves (26) formed in the blade portion (14) and are discharged outside the workpiece (19) and to the neck portion side of the blade portion (14).

10. A cutting device **characterized by** comprising the cutting tool (10, 10A) as claimed in any one of claims 1 to 9.

## Patentansprüche

1. Schneidwerkzeug (10, 10A), umfassend einen Klingenabschnitt (14), der von einer Seite (20) einer in einem Werkstück (19) gebildeten Durchgangsöffnung (22) einzuführen ist, zum Bearbeiten eines Umfangs der Durchgangsöffnung auf der anderen Seite (21) des Werkstücks, während es gedreht wird, und einen Halsabschnitt (13), der mit dem Klingenabschnitt (14) verbunden ist und einen Außendurchmesser aufweist, der kleiner ist als ein Außendurchmesser des Klingenabschnitts, **dadurch gekennzeichnet, dass**
eine Halsabschnittsseite des Klingenabschnitts (14) mindestens eine erste Nut (16), die in einer Richtung entgegengesetzt zu einer Drehrichtung verdreht ist, und mindestens eine erste Schneidkante (17), die sich entlang der mindestens einen ersten Nut (16) auf einer äußeren Umfangsseite des Klingenabschnitts (14) erstreckt, einschließt,
die Halsabschnittsseite des Klingenabschnitts (14) mit einem ersten Schneidabschnitt (18) zum Bearbeiten des Werkstücks bereitgestellt ist,
eine Spitzenseite des Klingenabschnitts (14) mindestens eine zweite Nut (26), die in der Drehrichtung verdreht ist, und mindestens eine zweite Schneidkante (24), die sich entlang der mindestens einen zweiten Nut (26) auf der äußeren Umfangsseite des Klingenabschnitts (14) erstreckt, einschließt, und
die Spitzenseite des Klingenabschnitts (14) mit einem zweiten Schneidabschnitt (25) zum Bearbeiten des Werkstücks (19) bereitgestellt ist.

2. Schneidwerkzeug nach Anspruch 1, **dadurch gekennzeichnet, dass** die erste Nut (16) und die zweite Nut (26) bereitgestellt sind, um einander zu kreuzen.

3. Schneidwerkzeug nach Anspruch 1, **dadurch gekennzeichnet, dass** der erste Schneidabschnitt (18) und der zweite Schneidabschnitt (25) in einer gleichen Anzahl bereitgestellt sind.

4. Schneidwerkzeug nach Anspruch 1, **dadurch gekennzeichnet, dass** mindestens zwei erste Schneidabschnitte (18) und mindestens zwei zweite Schneidabschnitte (25) bereitgestellt sind.

5. Schneidwerkzeug nach einem der Ansprüche 1 bis 4, **dadurch gekennzeichnet, dass** der Halsabschnitt (13) mit einem Schaft (11) verbunden ist, der einen Außendurchmesser aufweist, der größer ist als der Außendurchmesser des Halsabschnitts (13), und
dass ein Abschnitt, der den Schaft (11) mit dem Halsabschnitt (13) verbindet, einen sich verjüngenden Abschnitt (12) einschließt, der einen Durchmesser aufweist, der sich allmählich vom Schaft (11) zum Halsabschnitt (13) hin verengt.

6. Schneidwerkzeug nach einem der vorstehenden Ansprüche, wobei der oder die erste(n) Schneidabschnitt(e) (18) durch Neigen der jeweiligen ersten Schneidkante(n) (17) in einem vorbestimmten Winkel θ1 in Bezug auf eine Linie senkrecht zu einer Längsachse des Schneidwerkzeugs gebildet wird oder werden.

7. Schneidwerkzeug nach einem der vorstehenden Ansprüche, wobei der oder die zweite(n) Schneidabschnitt(e) durch Neigen der jeweiligen zweiten Schneidkante(n) (24) in einem vorbestimmten Winkel θ2 in Bezug auf eine Linie senkrecht zu einer Längsachse des Schneidwerkzeugs gebildet wird oder werden.

8. Schneidwerkzeug nach einem der vorstehenden Ansprüche, so konfiguriert, dass, wenn das Schneidwerkzeug (10) gedreht wird und der oder die erste(n) Schneidabschnitt(e) (18) des Schneidwerkzeugs (10) an dem Umfangsabschnitt der Durchgangsöffnung (22) anliegen, die in einer Rückfläche (21) des Werkstücks (19) auf der anderen Seite des Werkstücks (19) zu bearbeiten ist, Schneidspäne (23), die durch ein Schneiden des Werkstücks (19) erzeugt werden, durch die erste(n) Nut oder Nuten (16) passieren, die in dem Klingenabschnitt (14) gebildet ist oder sind, und unterhalb des Werkstücks (19) und zu der Spitzenseite des Klingenabschnitts (14) ausgetragen werden.

9. Schneidwerkzeug nach einem der vorstehenden Ansprüche, so konfiguriert, dass, wenn der oder die zweite(n) Schneidabschnitt(e) (25) des Schneidwerkzeugs (10) an dem Umfangsabschnitt der Durchgangsöffnung (22) anliegen, die in der Vorderfläche (20) des Werkstücks (19) auf der einen Seite des Werkstücks (19) zu bearbeiten ist, um das Werkstück (19) zu schneiden, Schneidspäne, die durch das Schneiden des Werkstücks (19) erzeugt werden, durch die zweite(n) Nut oder Nuten (26) passieren, die in dem Klingenabschnitt (14) gebildet ist oder sind, und außerhalb des Werkstücks (19) und zu der Halsabschnittseite des Klingenabschnitts (14) ausgetragen werden.

10. Schneidvorrichtung, **dadurch gekennzeichnet, dass** sie das Schneidwerkzeug (10, 10A) nach einem der Ansprüche 1 bis 9 umfasst.

## Revendications

1. Outil de coupe (10, 10A) comprenant une partie lame (14) devant être insérée depuis un côté (20) d'un trou traversant (22) formé dans une pièce à usiner (19), pour transformer une circonférence du trou traversant de l'autre côté (21) de la pièce à usiner en rotation, et une partie col (13) reliée à la partie lame (14) et ayant un diamètre extérieur inférieur au diamètre extérieur de la partie lame, **caractérisé en ce que**
un côté de la partie col de la partie lame (14) inclut au moins une première goujure (16) torsadée dans une direction opposée à une direction de la rotation et au moins un premier bord coupant (17) s'étendant le long de l'au moins une première goujure (16) sur un côté circonférentiel extérieur de la partie lame (14),
le côté de la partie col de la partie lame (14) est pourvu d'une première partie coupante (18) pour transformer la pièce à usiner,
un côté pointe de la partie lame (14) inclut au moins une seconde goujure (26) torsadée dans la direction de la rotation, et au moins un second bord coupant (24) s'étendant le long de l'au moins une seconde goujure (26) sur le côté circonférentiel extérieur de la partie lame (14), et
le côté pointe de la partie lame (14) est pourvu d'une seconde partie coupante (25) pour transformer la pièce à usiner (19).

2. Outil de coupe selon la revendication 1, **caractérisé en ce que** la première goujure (16) et la seconde goujure (26) sont pourvues pour se croiser.

3. Outil de coupe selon la revendication 1, **caractérisé en ce que** la première partie coupante (18) et la seconde partie coupante (25) sont pourvues en nombre égal.

4. Outil de coupe selon la revendication 1, **caractérisé en ce qu'**au moins deux premières parties coupantes (18) et au moins deux secondes parties coupantes (25) sont pourvues.

5. Outil de coupe selon l'une quelconque des revendications 1 à 4, **caractérisé en ce que** la partie col (13) est reliée à une tige (11) ayant un diamètre extérieur plus grand que le diamètre extérieur de la partie col (13), et
une partie reliant la tige (11) à la partie col (13) inclut une partie effilée (12) ayant un diamètre qui est progressivement plus étroit de la tige (11) vers la partie col (13).

6. Outil de coupe selon l'une quelconque des revendications précédentes, dans lequel la ou les premières parties coupantes (18) est ou sont formée(s) par inclinaison du ou des premiers bords coupants (17) respectifs selon un angle θ1 prédéterminé par rapport à une ligne perpendiculaire à un axe longitudinal de l'outil de coupe.

7. Outil de coupe selon l'une quelconque des revendications précédentes, dans lequel la ou les secondes parties coupantes est ou sont formée(s) par inclinaison du ou des seconds bords coupants (24) respectifs selon un angle θ2 prédéterminé par rapport à une ligne perpendiculaire à un axe longitudinal de l'outil de coupe.

8. Outil de coupe selon l'une quelconque des revendications précédentes, configuré pour que, lorsque l'outil de coupe (10) est mis en rotation, et la ou les premières parties coupantes (18) de l'outil de coupe (10) butent contre la partie circonférentielle du trou traversant (22) à transformer d'une surface arrière (21) de la pièce à usiner (19) de l'autre côté de la pièce à usiner (19), les copeaux de coupe (23) générés en coupant la pièce à usiner (19) passent à travers la ou les premières goujures (16) formées dans la partie lame (14) et sont évacués sous la pièce à usiner (19) et du côté pointe de la partie lame (14).

9. Outil de coupe selon l'une quelconque des revendications précédentes, configuré pour que lorsque la ou les secondes parties coupantes (25) de l'outil de coupe (10) butent contre la partie circonférentielle du trou traversant (22) à transformer de la surface avant (20) de la pièce à usiner (19) du côté de la pièce à usiner (19) pour couper la pièce à usiner (19), les copeaux de coupe générés en coupant la pièce à usiner (19) passent à travers la ou les secondes goujures (26) formées dans la partie lame (14) et sont évacués hors de la pièce à usiner (19) et du côté de la partie col de la partie lame (14).

10. Dispositif de coupe **caractérisé en ce qu'**il comprend l'outil de coupe (10, 10A) selon l'une quelconque des revendications 1 à 9.
